(19) Europäisches Patentamt
European Patent Office
Office européen des brevets

(11) EP 2 108 633 A1

(12) **EUROPEAN PATENT APPLICATION**

(43) Date of publication:
**14.10.2009 Bulletin 2009/42**

(51) Int Cl.:
***C04B 41/53*** *(2006.01)*

(21) Application number: **08154186.4**

(22) Date of filing: **08.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Technical University of Denmark**
**2800 Lyngby (DK)**

(72) Inventors:
- **Rörig-Dalgaard, Inge**
  **3450 Allerød (DK)**
- **Ottosen, Lisbeth M.**
  **3400 Hillerød (DK)**

(74) Representative: **Sundien, Thomas**
**Zacco Denmark A/S**
**Hans Bekkevolds Allé 7**
**2900 Hellerup (DK)**

(54) **Method and device for removing an ionic impurity from building structures**

(57) The invention relates to a method for removing an ionic impurity from building structures comprising the steps of:
- forming at least one electrode unit (2, 3) by mixing a clay compound with an ion exchange component;
- placing at least one positive electrode (anode) (4) and at least one negative electrode (cathode) (5) at the same or separate poultices (8);
- position one or more poultices (8) at the building structure (1); and
- apply an electric current to the electrodes (4, 5).

The invention further relates to a device for removing an ionic impurity from building structures, the device including electrode units (2, 3) consisting of at least one electrode being a positive electrode (anode) (4) or a negative electrode (cathode) (5) and at least one buffer component arranged in a poultice (8) including an ion exchange component.

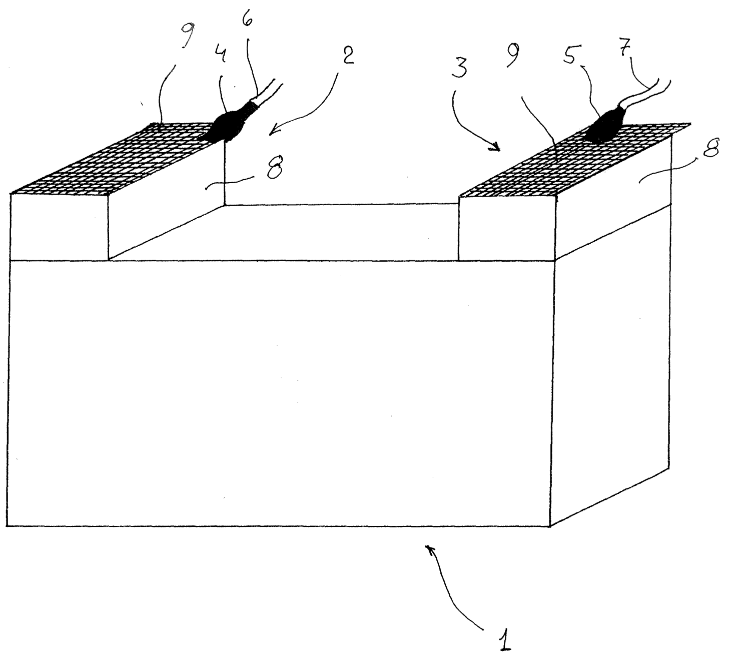


Fig. 1

EP 2 108 633 A1

## Description

The invention relates to a method for removing an ionic impurity from building structures.

The invention further relates to a device for removing an ionic impurity from building structures.

In many years it has been a problem that salt and/or water causes deterioration of wall materials in buildings (i.e. clay bricks, sandstones, mortar etc.).

Different techniques have been tried and especially two different techniques are used. One technique is to establish climate chambers. This technique is very energy and time consuming and rather large areas have to be cordoned off.

Another technique is based on wet or dry poultices. The problem with both techniques is that only minor parts of ions are transported out from the affected wall materials and therefore new damaging salt nucleation can happen again under the actual climate conditions.

As an example several expensive desalination campaigns to try to rescue murals from a church vault only resulted in minor improvements and following repainting of the murals.

Further this kind of treatment is often only temporary and not a lasting solution. Therefore a great risk of loosing murals exists.

If salts are not removed sufficient from affected walls, before any renovating, the result will be the need for yet desalination.

According to electrokinetic theories, water and ion transport can be initiated by applying an electric potential gradient across a wet and salt loaded porous material, desalination through electromigration, which is movement of ions in a solution in an applied electric field, should occur.

By use of electromigration a controlled ion transport will occur in porous wet materials like bricks. The idea is to transport the damaging ions out of bricks and mortar and into an accumulation layer which can be removed after ended treatment.

Another aspect is that at the same time, or after the desalination (or removal of damaging ions), drying through electroosmosis should continue.

A typical content of salt in a salt loaded brick can be 0,5 - 1,0 % per weight where experiments have shown that electroosmotic dewatering initiates when the salt content reaches a reduction of 50 - 100 times the starting level of approximately 0,5 - 1,0 % per weight.

Following a well known and accepted transport process, electromigration, is used, i.e. movement of ions in a solution in an applied electric DC field. In wet porous clay brick masonry, which most Danish church vaults consist of, electromigration is expected to be an efficient transport mechanism for desalination of the church vaults. The advantage of using an applied electric DC field is that the ions are affected directly and they are therefore less poultice and substrate dependent than other desalination methods.

Some electromigration desalination methods have adverse effects, such as discoloration of the wall area close to the electrodes due to deterioration of the electrode caused by electrode reaction.

To avoid such discoloration electrodes manufactured of titanium or oxidised titanium can be used.

The electrodes can also be manufactured of a conductive grating.

Other methods depend on electrodes placed in drilled holes in the walls. Such methods cause damages to the treated structure part. It may be possible to place the holes at appropriate positions, but nevertheless avoiding making holes in the structure part to be treated is to prefer.

The aim of the invention is to provide an effective and durable method for removing an ionic impurity from building structures and thereby provide a desalination of building structures, such as existing walls, where no holes are to be drilled in the surface to be treated and where the pH values in the treatment area are controlled and held in a fairly neutral interval during removal of an ionic impurity.

Methods of reducing the pH value by adding clay with a natural high content of carbonate is known, but a serious drawback in these known methods is that you do not know for how long the treatment will proceed and you do not know for how long the clay rich in carbonate will protect the building structure from being damaged by too low or too high pH values.

This is achieved according to the invention by using a method where it is possible to calculate before starting the treatment how much neutralization material is needed (dependent of current strength and duration time).

To achieve a satisfactory removal of an ionic impurity where the pH values in the treatment area are controlled and held in a fairly neutral interval a new method is developed.

It is achieved by the method comprising the steps of:

- forming at least one poultice by mixing a clay compound with an ion exchange component;
- placing at least one positive electrode (anode) and at least one negative electrode (cathode) at the same or separate poultices;

- position one or more poultices at the building structure; and
- apply an electric current to the electrodes.

In an embodiment at least one poultice is formed by mixing a clay compound with an acid.
In an embodiment of the method the neutralization need is calculated before the treatment is carried out (dependent of current strength and duration time) and added as buffer material to the poultice in the calculated amount to ensure the needed neutralization effect.
Hereby it is possible to determine previous to the treatment for how long the added neutralization material will last. This method gives the opportunity to calculate when the electrodes and the poultice material must be checked and possibly added with more neutralisation material or new buffer material.
To obtain this effect kaolin clay can be used as basis material in the poultice.
To further ensure the effect of the method calcium carbonate can be used as buffer material.
It is further an aim with the invention to provide a device for providing an effective and durable removal of an ionic impurity from building structures, such as existing walls, where no holes are to be drilled in the surface to be treated and where the pH values in the treatment area can be controlled and held in a fairly neutral interval during removal of an ionic impurity.
This is achieved by a device according to the invention, where the device includes electrode units consisting of at least one electrode being a positive electrode (anode) or a negative electrode (cathode) and at least one poultice including an ion exchange component.
This is further achieved by a device where a buffer component is arranged in a poultice at the positive electrode (anode).
It is also achieved by a device where a buffer component is arranged in a poultice at the negative electrode (cathode).
In an embodiment an electrode unit includes one or more electrodes, a poultice including basis material, and buffer components.
In another embodiment the basis material comprises kaolin clay, and in further an embodiment the buffer material comprises carbonate.
In yet an embodiment the carbonate in the buffer material is calcium carbonate.
In an embodiment the poultice arranged at the positive electrode (anode) comprises carbonate.
In another embodiment the poultice arranged at the negative electrode (cathode) comprises acid.
In an alternative embodiment the electrodes can be connected to the same electrode unit. In such an embodiment the poultice of the electrode unit includes both acid and carbonate.
In a further alternative embodiment the poultice can be a multi layer poultice (two or more layers) where different acid concentrations could be applied to different layers. The multi layer poultice can include different layers with different values relating to the layers. Some layers can be neutral, some layers can have different alkaline concentrations and some layes can have different acid concentrations. It is also possible that two or more of the layers can be identical.
In an embodiment with a three layer poultice, the multi layer poultice comprises following layers: a first layer closest to the electrode includes kaolin clay added with acid, a second (middle) layer including kaolin clay added with liquid, and a third layer including kaolin clay added with carbonate and liquid water.
New electrode units consisting of: electrodes, poultices of kaolin clay and buffer components which were able to neutralize the produced acid and base production are developed. These electrode units have good ability to retain neutral pH values in the substrate.
Hereby is achieved an electromigration desalination effect and thereby removal of an ionic impurity with no obvious adverse effects.
An effect of removing ionic impurities i.e. from a building structure is desalination of the building structure. In the following desalination is used as the general expression of removing ionic impurities from building structures, but it is obvious that the method and apparatus can be used to remove other ionic impurities.
Following further embodiments of the invention will be described with reference to the drawing, where

Figure 1 shows an experimental configuration of a piece of a wall provided with electrode units.

In a method of removing an ionic impurity from building structures according to an embodiment of the invention is based on determination of current strength supplied from a current supply, how much neutralization material is needed to achieve and maintain during treatment a substantially neutral pH value to avoid damaging the building structure.
The method is focused on electromigration, which different to other methods acts directly on ions. As the ions are directly affected by an electric field the method is though to be more independent of substrate material characteristics and ion content than other methods.
In one embodiment, the method comprises the steps of:

- forming at least one electrode unit by mixing a clay compound with an ion exchange component;
- placing at least one positive electrode (anode) and at least one negative electrode (cathode) at the same or separate poultices;
- position one or more poultices at the building structure; and
- apply an electric current to the electrodes.

By application of poultices and addition of water an indirect ion-transport and ion-accumulation can take place as a result of concentration gradients or evaporation as a driving force

Earlier electrochemical methods suffer from adverse effects, such as discoloration close to the electrodes due to deterioration of the electrode caused by the electrode reaction.

Further extreme pH changes alter the original material significantly and can not be accepted especially not when dealing with cultural heritage.

By use of electromigration a controlled ion transport will occur in porous wet materials like bricks. By using the method according to the invention it is possible to transport the damaging ions out of building structures and into an accumulating layer which can be removed after ended treatment. The method is also applicable to treatment of church vaults, bricks, mortar, and masonry in general

An electric circuit in a wet brick is maintained by electrons in the electrodes which through electrode reactions are transformed to iontransport in the pore solution and visa versa.

Among others will this formation, called electrode reactions result in varying extends of acid (H+) and base (OH-):

$$\text{Anode (+)} : H_2O\ (aq) \rightarrow 2H^{+} + \tfrac{1}{2}\ O2(g) + 2e^{-}$$

$$\text{Cathode (-)} : H_2O\ (aq) + e^{-} \rightarrow OH^{-} + \tfrac{1}{2}\ H2\ (g)$$

If no precautions are taken against the acid and base production at the electrodes, pH of the masonry will change. Exposure of acid to ceramic material (roofing tiles) results in increased porosity and thus acid is known to damage the ceramic material. Additionally, the effect of the method will most properly decrease as the current will transport H+ and OH- instead of the wanted anions and cations when present, since $H^+$ and OH- possess exceptionally high ionic mobility. Reduced transport number and thereby also chloride transport has been measured by desalination of concrete with electromigration mainly attributed to the OH- generation and its higher mobility. This implies that there is a limit in the amount of extraction and complete electromigration desalination is impossible, if no action is taken against this OH- generation when dealing with concrete.

During the electromigration process acid is produced by the anode. $H^+$ is inevitable produced as a part of the electric circuit by the anode; however, hindering the produced $H^+$ in entering the brick is possible.

It is possible to calculate the produced acid and neutralize it by addition of the actual needed ion exchange component. The ion exchange component is a component, that through its ability to exchange ions maintains its preferred state and the total capacity of an exchanger and thereby time where it is able to neutralize is dependent of the ion exchange components concentration.

Ion exchange occurs between equivalent amounts of ions to preserve electro neutrality at all times in both the exchanger and solution phases. One mole $H^+$ is produced by use of one mole e- which means that the $H^+$ production is dependent of the applied current.

By calculation of the consumed coulomb amount by a specific current strength and duration:

$$Q = I*t$$

conversion of coulomb amount to mol $H^+$

$$n_{H^+} = \frac{Q \cdot n_{H^+}}{F \cdot n_{e^-} \cdot n_{H^+}}$$

the concentration to be neutralized is calculated.

Carbonates ability to neutralize acid in the development of electrode units is used. Neutralization need is calculated before the treatment (dependent of current strength and duration time) and the carbonates are added as buffer material to a basis material in the calculated amount to ensure the needed neutralization effect. The basis material is preferably chosen within kinds of clay and most preferably kaolin clay.

Carbonate can be added to the clay as a part of different chemical compounds. Calcium carbonate is a suitable carbonate as it is a harmless component and has a very low solubility, but other carbonates can be used as well, just as long as they do not damage the building structure to be treated.

Calcium carbonate is also the most abundant and the type present in tile work clay from previous work. Contrary to when the calcium carbonate in tile work is used as buffer component, a poultice which solely consists of kaolin clay and calcium carbonate is a clean system which makes it easier to control the processes.

An example of calculation of the neutralization process, taking the carbonate percentage in calcium carbonate into account is shown:

$$\% \ CO_3 \text{ in } CaCO_3: \ \frac{m_{CO_3^{2-}}}{m_{CaCO_3}} = \frac{60,01g}{100,09} \sim 60 \ \%$$

the exact mol carbonate was added to the clay mixture:

$$m_{CO3}{}^{2-} = n_{CO3}{}^{2-} \times M_{CO3}{}^{2-} \times \%CO_3$$

Where $n_{CO3}{}^{2-} = n_H{}^+$ to be neutralized.

It is obvious that if both the anode and cathode are placed on the same side of the brick or masonry, the current distribution is non-uniform resulting in a non-uniform consumption of ion exchange component and undesired pH changes close to the electrodes.

To compensate for this effect, it is possible to widen or broaden the electrode unit. To further ensure an appropriate transmission of current from the cords through the electrodes to the poultice, the electrodes can be configured as gratings and placed at top of or in the poultice which will result in satisfying results and to maintain a stable pH.

To calculate the needed acidic acid to the kaolin clay, the consumed coulomb amount was calculated and converted to mol hydroxide. Dependent of the used acidic acid concentration the needed volume could change.

To establish an electric circuit, electrodes with an impressed current is needed. For the extraction of the damaging ions, an accumulating material (poultice) is needed. A traditional poultice can consist of one or more of the following components: cellulose, clay (bentonit, kaolin), newspaper, sand, filler etc. The idea of the present method is to combine use of poultice and electromigration, by improving the poultice to electromigration conditions.

To be sure to get fine results it is important to ensure:

- Clean poultice with low initial ion content: to isolation of the electromigration effects, make them more clear during the documentation phase and hinder new ion transport into the brick/mortar.
- Good conductivity: to maintain the electric circuit.
- Good workability and thereby contact to the substrate.
- Limited shrinkage to maintain the god contact to the substrate.

Contrary to traditional desalination with poultices the material characteristics (e.g. capillarity) of the poultice compared to the material characteristics of the substrate are not essential, since the driving force is the current and not diffusion or convection. This fact makes the method for removal of an ionic impurity more robust compared to other desalination methods.

Traditional kaolin clay was chosen as basis material due to its purity, low shrinkage, god workability and conductivity when a liquid is added. The liquid to solid ratio between kaolin clay and liquid was decided in order to obtain the right consistence of the mixture. A suitable consistence can be achieved by adding 40 % or more of a liquid to the kaolin clay.

The liquid can be distilled or demineralised water or the liquid can be an acid mixed with distilled or demineralised water. If the concentration of the acid is suitable for the removal of ionic impurities the liquid can be replaced by the acid since the purpose of the liquid also is to obtain the right consistence of the mixture to form the electrode units.

The amount of acid and e.g. water together forms 40% or more of a liquid in relation to the dry content of the poultice.

The pH control can take place at the anode, at the cathode or at both the anode and cathode.

The pH control can be performed by adding acid to the buffer electrode forming the cathode and/or adding carbonate to the buffer electrode forming the anode.

When taking the acid production at the anode into account, using buffer compound in the anode clay the extraction of an-ions improves considerably. The same applies to extraction of cat-ions using buffer compound in the cathode clay, though the performance of the desalination process is unstable and ends before satisfying desalination is obtained. When taking as well the acid as the base production at the electrodes into account using buffer compounds in both the anode and the cathode poultice, a stable desalination performance is obtained even at very low ion contents and only minor unproblematic voltage increase will occur contrary the other methods.

When using the basis poultice, only a very little chloride amount of ions will be extracted before the voltage increases. Addition of buffer compounds to the anode poultice leads to a considerable higher total ion extraction but the desalination process will probably end before a sufficiently satisfactory value is obtained. If buffer compounds are used in both anode and cathode poultice even better ion reduction is obtained.

Development of the method and the device for removing an ionic impurity from building structures resulted in steady neutral pH in the masonry and desalination from a normal high problematic ion content in church vaults to a very low and completely unproblematic ion content.

Corresponding to a certain current strength a certain amount of carbonate and/or acid according to the above determining or calculation method is added. This calculation gives the period for how long the treatment can go on without surveillance and without maintenance.

The current strength, the amount of carbonate, the amount of acid, and the time are linked together being proportional to each other.

A device for removing an ionic impurity from building structures 1 includes a current supply (not shown), electrode units 2, 3 consisting of at least one positive electrode (anode) 4 and at least one negative electrode (cathode) 5, conductive cords or cables 6, 7 connecting the electrodes with the current supply, and at least one poultice 8 including an ion exchange component.

In figure 1 is shown electrode units 2, 3 where the cords or cables 6, 7 are connected to poultices 8 through a conductive grating 9.

The purpose of the grating 9 is to ensure a uniform distribution of current to the poultice 8.

In an embodiment the poultice is arranged at the positive electrode (anode) 4 and the buffer component is carbonate.

In a further embodiment the carbonate is added to the poultice as calcium carbonate.

In another embodiment the poultice is arranged at the negative electrode (cathode) 5 and the buffer component is a weak acid.

In an embodiment the week acid is acidic acid. In principle all weak acids can be used as long as the acid is capable of releasing hydrogen ions.

In further an embodiment the electrode units 2, 3 comprises electrodes 4, 5, basis material and one or more buffer components.

In yet an embodiment the basis material comprises kaolin clay.

To modify the current strength or the number of electrodes needed it is possible to adjust the distance between the poultices.

In an alternative embodiment the electrodes 4, 5 can be connected to the same electrode unit 2 or 3. In such an embodiment the poultice 8 of the electrode unit 2, 3 includes both acid and carbonate.

As described before the pH control can take place at the anode, at the cathode or at both the anode and cathode.

The pH control can be performed by adding acid to the electrode unit forming the cathode and/or adding carbonate to the electrode unit forming the anode.

The measured pH values are not extreme and they are not expected to cause damage to the substrate, though if the pH decrease to 5.4 is found to be problematic further improvement can be made, e.g. introduction of a poultice including more than one buffer layer.

In an embodiment of a multi layer poultice (two or more layers) different acid concentrations could be applied to different layers. The multi layer poultice can include different layers with different values relating to the layers. Some layers can be neutral, some layers can have different alkaline concentrations and some layes can have different acid concentrations. It is also possible that two or more of the layers can be identical.

In an embodiment with a three layer poultice, the multi layer poultice 8 comprises following layers: a first layer closest to the electrode 4, 5 includes kaolin clay added with acid, a second (middle) layer including kaolin clay added with liquid, and a third layer including kaolin clay added with carbonate and liquid.

The liquid can be distilled or demineralised water or the liquid can be an acid mixed with distilled or demineralised water. If the concentration of the acid is suitable for the removal of ionic impurities the liquid can be replaced by the acid since the purpose of the liquid also is to obtain the right consistence of the mixture to form the electrode units.

The main purpose of the middle layer is to ensure as little correspondence between the acidic clay and the alkaline clay as possible.

The function of the alkaline clay, which is the third layer, is to neutralise the acid, which acid otherwise would diffuse into the underlying material (masonry).

The amount of base in the alkaline clay should be added in proportion to the amount of acid added to the acidic clay to keep the pH value in the poultice in the desired balance.

In yet an embodiment the layers can be separated by a separating layer such as paper or another thin material. A material suitable for such separation purpose could be Japanese Paper

The longer distance between the electrodes, the higher current strength needed, under the same conditions as before.

The distance between the electrodes or the current strength can also be modified in relation to the internal ionic content in the structure to be treated.

The invention is not limited to church vaults, since it is possible to use the method and the device for desalination of building structures on existing buildings or building elements exposed to salt. The method is suitable for desalination of old building structures such as church vaults, especially when the vaults (or walls) are provided with murals worthy of preservation.

The invention is also intended for use in new build building structures as well.

## Claims

1. A method for removing an ionic impurity from building structures comprising the steps of:

   - forming at least one electrode unit (2, 3) by mixing a clay compound with an ion exchange component;
   - placing at least one positive electrode (anode) (4) and at least one negative electrode (cathode) (5) at the same or separate poultices (8);
   - position one or more poultices (8) at the building structure (1); and
   - apply an electric current to the electrodes (4, 5).

2. A method for removing an ionic impurity according to claim 1 **characterized in** forming at least one poultice (8) by mixing a clay compound with an acid.

3. A method for removing an ionic impurity according to claim 1 or 2, **characterized in that** neutralization need is calculated before the treatment is carried out (dependent of current strength and duration time) and added as buffer material to the basis material in the calculated amount to ensure the needed neutralization effect.

4. A method for removing an ionic impurity desalination according to claim 3, **characterized in that** kaolin clay is used as basis material.

5. A method for removing an ionic impurity desalination according to claim 3 or 4, **characterized in that** carbonate is used as buffer material.

6. A device for removing an ionic impurity from building structures, the device including electrode units (2, 3) consisting of at least one electrode being a positive electrode (anode) (4) or a negative electrode (cathode) (5) and at least one buffer component arranged in a poultice (8) including an ion exchange component.

7. A device according to claim 6, **characterized in that** a buffer component is arranged in a poultice (8) at the positive electrode (anode) (4).

8. A device according to claim 6, **characterized in that** a buffer component is arranged in a poultice (8) at the negative electrode (cathode) (5).

9. A device according to claim 6, **characterized in that** an electrode unit (2, 3) includes one or more electrodes (4, 5), a poultice (8) including basis material and buffer components.

10. A device according to any one of the claims 6, 7, 8 or 9, **characterized in that** the basis material includes kaolin clay

11. A device according to any one of the claims 6, 7, 8 or 9, **characterized in that** the buffer component includes

carbonate.

**12.** A device according to claim 11, **characterized in that** the buffer component is calcium carbonate

**13.** A device according to any one of the claims 6, 7, 8, 9, 10, 11 or 12 **characterized in that** an electrode unit (2, 3) includes more than one buffer layer.

**14.** A device according to claim 13, **characterized in that** a first layer closest to the electrode (4, 5) includes kaolin clay added with acid, a second (middle) layer including kaolin clay added with a liquid, and a third layer including kaolin clay added with carbonate and a liquid.

**15.** A device according to claim 14, **characterized in that** the acid is acidic acid.

**16.** A device according to claim 14, **characterized in that** the carbonate is supplied in form of calcium carbonate.

**17.** A device according to claim 14, **characterized in that** the liquid includes demineralised water or distilled water or acid.

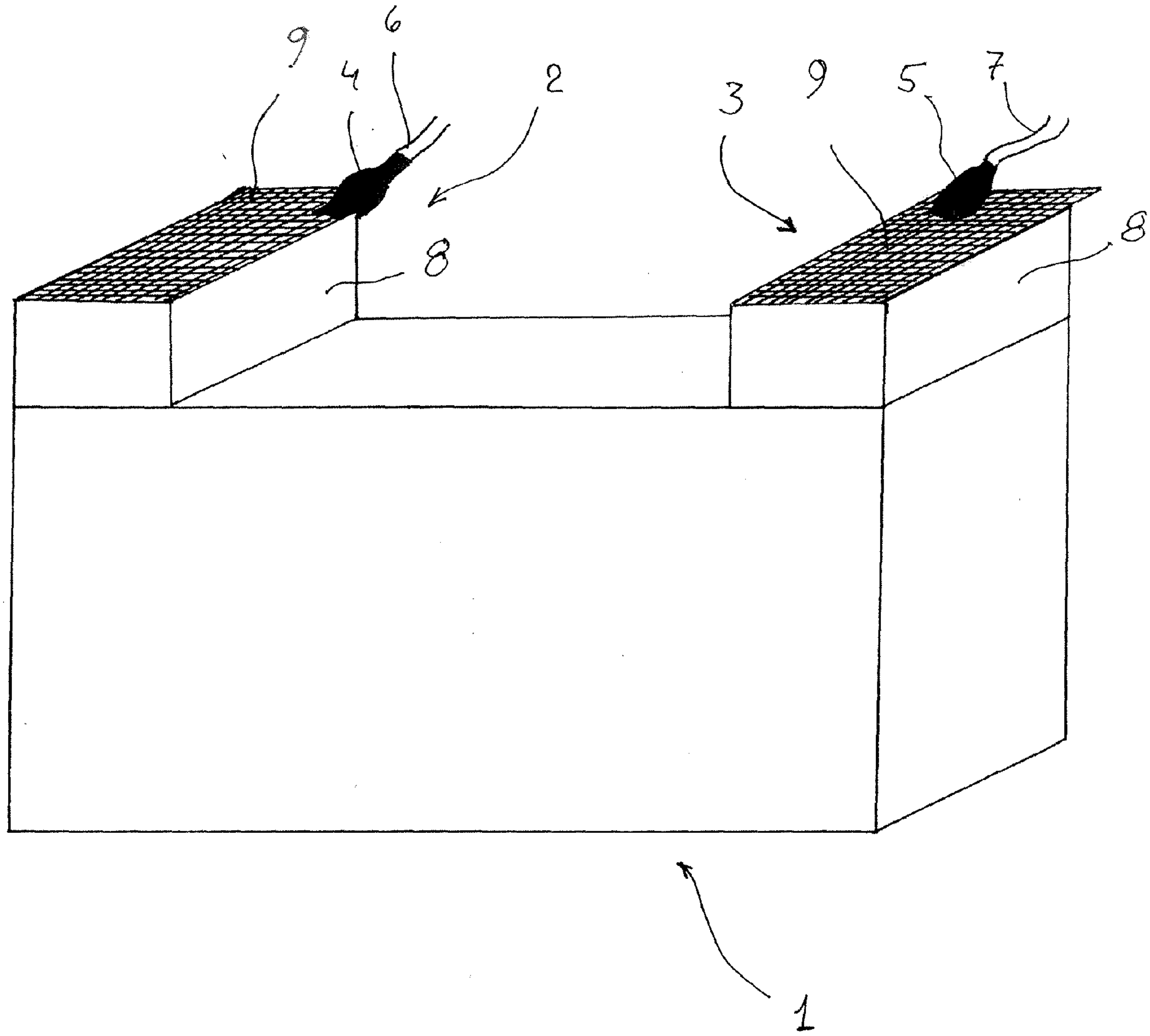


Fig. 1

European Patent Office

# EUROPEAN SEARCH REPORT

Application Number
EP 08 15 4186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 723 947 A (FREYSSINET INT STUP [FR]; BETOREC [FR]) 31 July 1996 (1996-07-31)<br>* claim 1 *<br>* column 6, line 35 - column 7, line 3 *<br>* figure 2 *<br>----- | 1-17 | INV.<br>C04B41/53 |
| X | DE 198 51 702 A1 (SCHULZE HELMUT [DE]) 11 May 2000 (2000-05-11)<br>* claims 1,6 *<br>* page 3, line 54 - line 66 *<br>* figure 1 *<br>----- | 1-17 | |

TECHNICAL FIELDS SEARCHED (IPC)

C04B

The present search report has been drawn up for all claims

1

| Place of search | Date of completion of the search | Examiner |
|---|---|---|
| Munich | 5 August 2008 | Rosenberger, Jürgen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 08 15 4186

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2008

| Patent document cited in search report | Publication date | Patent family member(s) | Publication date |
|---|---|---|---|
| EP 0723947 A | 31-07-1996 | DE 69603511 D1 | 09-09-1999 |
| | | DE 69603511 T2 | 13-04-2000 |
| | | ES 2136371 T3 | 16-11-1999 |
| | | FR 2729694 A1 | 26-07-1996 |
| DE 19851702 A1 | 11-05-2000 | NONE | |

EPO FORM P0459

For more details about this annex : see Official Journal of the European Patent Office, No. 12/82